Europäisches Patentamt

European Patent Office

Office européen des brevets

(11) Veröffentlichungsnummer: **0 231 457**

**A1**

(12) **EUROPÄISCHE PATENTANMELDUNG**

(21) Anmeldenummer: 86116154.5

(22) Anmeldetag: 21.11.86

(51) Int. Cl.⁴: **H02J 13/00** , H04B 3/54

(30) Priorität: 15.01.86 CH 132/86

(43) Veröffentlichungstag der Anmeldung:
12.08.87 Patentblatt 87/33

(84) Benannte Vertragsstaaten:
CH DE ES FR GB IT LI SE

(71) Anmelder: **BBC Aktiengesellschaft Brown, Boveri & Cie.**
**Haselstrasse**
**CH-5401 Baden(CH)**

(72) Erfinder: **Braun, Walter, Dr.**
**Zentralstrasse 137**
**CH-5430 Wettingen(CH)**
Erfinder: **Hagmann, Walter, Dr.**
**Pilgerstrasse 22**
**CH-5405 Dättwil-Baden(CH)**
Erfinder: **Hanselmann, Urs**
**Im Raindörfli 19**
**CH-8038 Zürich(CH)**
Erfinder: **Maibach, Bruno**
**Pfaffenziel 11b**
**CH-5300 Ennetturgi(CH)**
Erfinder: **Schranz, Peter**
**Im Lee 28**
**CH-4144 Arlesheim(CH)**

(54) Verfahren zur Datenübertragung über ein elektrisches Verteilnetz und Übertragungssystem zur Durchführung des Verfahrens.

(57) Bei der Uebertragung von Daten in einem elektrischen Verteilnetz zwischen einer an eine Mittelspannungsebene (3) angekoppelten zentralen Kontrollstation (6) und wenigstens einer an eine Niederspannungsebene (4) angekoppelten Endstation - (10), erfolgt die Uebertragung innerhalb der Mittelspannungsebene (3) mit einer ersten Trägerfrequenz ($f_1$) und von der Mittelspannungsebene (3) zur Niederspannungsebene (4) nach Umsetzung in einem Transponder (8, 9) mit einer kleineren zweiten Trägerfrequenz ($f_{21}$, $f_{22}$). Durch diese Aufteilung kann das System hinsichtlich der unterschiedlichen Kanaleigenschaften der beiden Nachrichtenkanäle optimiert werden.

FIG.1

## Verfahren zur Datenübertragung über ein elektrisches Verteilnetz und Uebertragungssystem zur Durchführung des Verfahrens

Die vorliegende Erfindung betrifft ein Verfahren zur Datenübertragung über ein elektrisches Verteilnetz sowie ein Uebertragungssystem zur Durchführung des Verfahrens.

Elektrische Verteilnetze, die in der Regel eine Hochspannungsebene, eine Mittelspannungsebene und eine Niederspannungsebene mit den entsprechenden Hausanschlüssen umfassen, werden seit langem, insbesondere für die Zwecke der beteiligten Energie-Versorgungs-Unternehmen, als Medium für die Uebertragung von Daten verwendet.

So ist es z.B. aus den BBC-Nachrichten, Heft 8/9, 1977, S. 388-395 bekannt, für den Aufbau sogenannter Rundsteueranlagen, bei denen Steuerbefehle von den Energie-Versorgungs-Unternehmen zu den Verbrauchern geleitet werden, die Mittel-oder Hochspannungsebene des Verteilnetzes als Uebertragungsweg zu benutzen.

Schwierigkeiten bei einer solchen Informationsübertragung ergeben sich für die Uebertragung von einer Ebene des Verteilnetzes auf eine andere, da zwischen den Ebenen entsprechende Transformatoren angeordnet sind, welche als grosse Induktivitäten insbesondere die Ausbreitung höherer Frequenzen behindern.

Der nachteilige Einfluss der Transformatoren kann einerseits dadurch vermieden werden, dass parallel zum Transformator ein nachrichtentechnischer Bypass geschaltet ist, der jeweils die Daten vor dem Transformator aufnimmt, regeneriert, und hinter dem Transformator wieder einspeist. Eine solche Bypass-Lösung ist jedoch insbesondere zwischen Mittel-und Niederspannungsebene sehr aufwendig, da dort eine Vielzahl von Transformatoren vorhanden ist, die alle überbrückt werden müssen, wenn die Datenübertragung bis zu den Hausanschlüssen reichen soll.

Andererseits ist es möglich, durch diese Transformatoren hindurch mit entsprechend niedrigen Frequenzen Daten zu übertragen. Dies hat jedoch den Nachteil, dass die Uebertragung in dem in Frage kommenden Frequenzbereich durch ein starkes niederfrequentes Rauschen beeinträchtigt wird, in dem vor allem Harmonische der Netzfrequenz enthalten sind.

Eine Datenübertragung über die Mittelspannungsebene auf die einzelnen Hausanschlüsse ist daher bei den bekannten Lösungen entweder nur mit grossem Aufwand oder mit geringer Störsicherheit möglich.

Aufgabe der vorliegenden Erfindung ist es nun, ein Verfahren zur Datenübertragung zu schaffen, dass sowohl hinsichtlich des apparativen Aufwands als auch hinsichtlich der Störsicherheit wesentliche Verbesserungen bringt.

Die Aufgabe wird bei einem Verfahren der eingangs genannten Art durch die Merkmale aus dem Kennzeichen des Anspruchs 1 gelöst.

Durch die Wahl zweier unterschiedlicher Trägerfrequenzen, von denen die höhere zur Uebertragung innerhalb der Mittelspannungsebene und die niedrigere zur lokalen Uebertragung von der Mittelspannungsebene durch die Transformatoren zu den Hausanschlüssen verwendet werden, wird das Uebertragungssystem optimal den unterschiedlichen Eigenschaften der beiden voneinander verschiedenen Nachrichtenkanäle angepasst. Die höhere erste Trägerfrequenz gewährleistet eine rauscharme Ausbreitung innerhalb der Mittelspannungsebene. Die niedrigere zweite Trägerfrequenz erlaubt eine wenig gedämpfte Uebertragung durch die Transformatoren zwischen Mittel-und Niederspannungsebene.

Bei den Eigenschaften der üblichen Verteilnetze als Nachrichtenkanäle ist es besonders günstig für die Datenübertragung, wenn die erste Trägerfrequenz im Bereich zwischen 20 kHz und 140 kHz, und die zweite Trägerfrequenz im Bereich zwischen 4 kHz und 20 kHz liegt.

Weiterhin erweist es sich als vorteilhaft, für die Uebertragung innerhalb der Mittelspannungsebene mittels der ersten Trägerfrequenz ein PSK-Modulationsverfahren (PSK = Phase Shift Keying) zu verwenden, weil ein solches Verfahren energetisch besonders sparsam ist.

Darüberhinaus lassen sich weitere Verbesserungen in den Uebertragungseigenschaften erzielen, wenn die Uebertragung in der Mittelspannungsebene mit einer ständig wechselnden ersten Trägerfrequenz erfolgt (sogenanntes FH = Frequency Hopping), weil dann Spitzen in der Kurve der Ausbreitungsdämpfung leicht umgangen werden können, so dass alle Teilnehmer der Uebertragung im Mittel gleich gut erreicht werden.

Das erfindungsgemässe Uebertragungssystem weist eine zentrale Kontrollstation auf, die hinter einer zwischen Hoch-und Mittelspannungsebene liegenden Unterstation an die Mittelspannungsebene angekoppelt ist. Von dieser Kontrollstation gelangen die Daten, moduliert auf die erste Trägerfrequenz, zu einem ebenfalls an die Mittelspannungsebene an anderer Stelle angekoppelten Transponder, der sie auf die zweite Trägerfrequenz umsetzt und wieder in die Mittelspannungsebene einspeist. Die Daten gelangen dann über die nächstgelegenen Niederspannungstransformatoren zu den entsprechenden Hausanschlüssen.

In grösseren Verteilnetzen sind auf der Mittelspannungsebene eine Mehrzahl von Transpondern vorgesehen, die benachbarte lokale Bereiche selbständig abdecken. Um hier gegenseitige Störungen zu vermeiden, ist es vorteilhaft, dass nebeneinanderliegende Transponder die Daten auf unterschiedliche zweite Trägerfrequenzen transponieren.

Die Erfindung soll nun nachfolgend im Zusammenhang mit der Zeichnung anhand einiger Ausführungsbeispiele näher erläutert werden. Es zeigen

Fig. 1 den schematischen Aufbau eines Uebertragungssystems gemäss einem bevorzugten Ausführungsbeispiel der Erfindung,

Fig. 2 den inneren Aufbau einer zentralen Kontrollstation gemäss Fig. 1 im Blockschaltbild, und

Fig. 3 den inneren Aufbau eines Transponders gemäss Fig. 1 im Blockschaltoild.

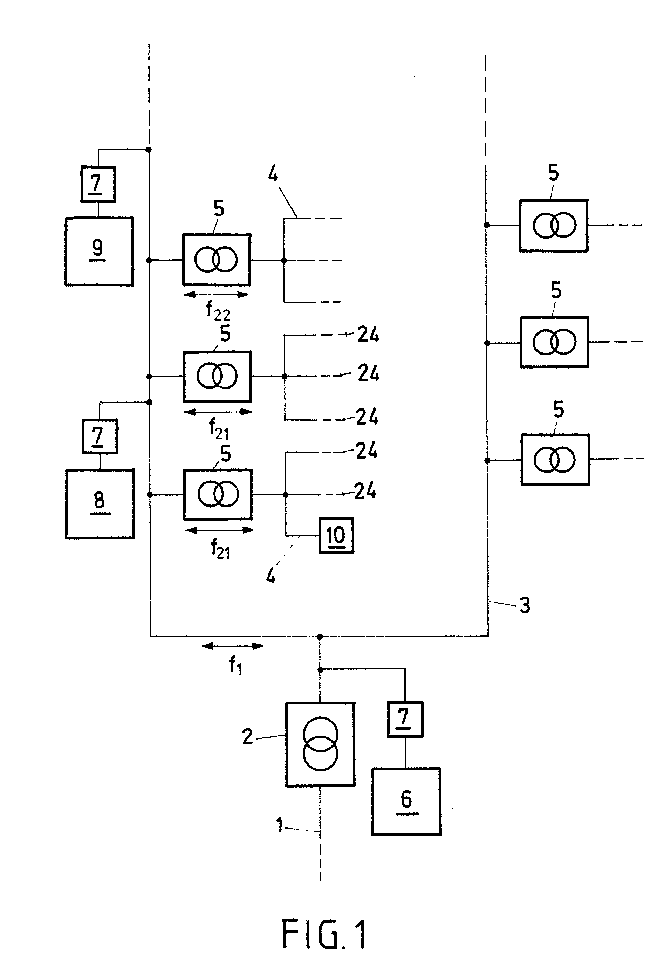

Fig. 1 zeigt schematisch den Aufbau eines Uebertragungssystems auf der Basis eines elektrischen Verteilnetzes gemäss einem bevorzugten Ausführungsbeispiel der Erfindung.

Das elektrische Verteilnetz umfasst eine Hochspannungsebene 1 mit einer Spannung von z.B. 110 oder 220 kV, von der in Fig. 1 nur ein kleiner Teil dargestellt ist, eine Mittelspannungsebene 3 mit einer Spannung von z.B. 10 bis 30 kV und eine Niederspannungsebene 4 mit einer Hausanschlussspannung von 110, 220 oder 380 V.

Hochspannungsebene 1 und Mittelspannungsebene 3 sind über eine Unterstation 2 mit einem entsprechenden Transformator verkoppelt. Ebenso existiert eine Verkopplung der Mittelspannungsebene 3 mit den Niederspannungsebenen 4 über vergleichbare Niederspannungstransformatoren 5, die entlang der Mittelspannungsebene 3 verteilt angeordnet sind. Jede Niederspannungsebene 4 verzweigt sich in eine Mehrzahl von Hausanschlüssen 24, von denen einer in Fig. 1 mit einer Endstation 10 für den Empfang und die Sendung von Daten belegt ist.

Die Uebertragung der Daten geschieht zwischen der Endstation 10 sowie anderen, nicht eingezeichneten Endstationen und einer zentralen Kontrollstation (central controller) 6, die auf der Mittelspannungsseite der Unterstation 2 über ein Koppelglied 7 an die Mittelspannungs ebene angekoppelt ist.

Das Koppelglied 7 kann z.B. ein Kopplungskondensator sein, wie er aus der eingangs genannten Druckschrift bekannt ist.

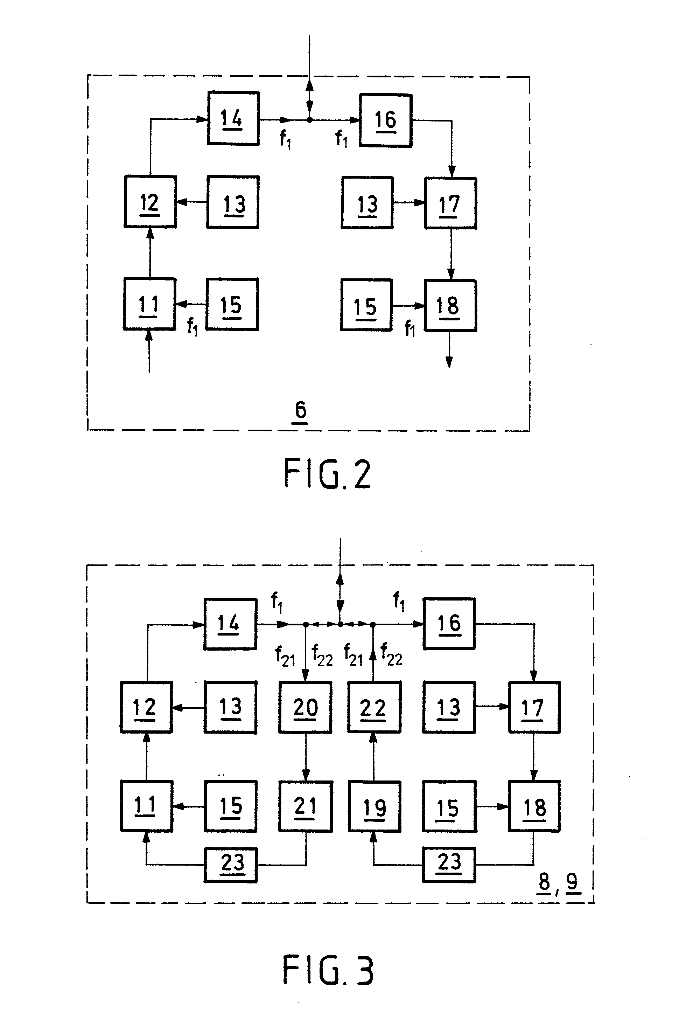

Die zentrale Kontrollstation 6, deren innerer Aufbau in einem bevorzugten Ausführungsbeispiel in Fig. 2 dargestellt ist, sendet Daten auf die bzw. empfängt Daten von der Mittelspannungsebene 3, die mittels einer ersten Trägerfrequenz $f_1$ übertragen werden. Diese Daten gelangen zu bzw. kommen von wenigstens einem Transponder 8, 9, welcher gleichfalls über ein Koppelglied 7 in der Nähe eines oder mehrerer Niederspannungstransformatoren 5 angekoppelt ist. Der innere Aufbau eines solchen Transponders 8, 9 ist in einem Ausführungsbeispiel in Fig. 3 in Form eines Blockschaltbildes wiedergegeben.

In dem Transponder 8, 9 werden die Daten, die mit der ersten Trägerfrequenz $f_1$ von der zentralen Kontrollstation 6 ausgesendet werden, empfangen, auf eine zweite Trägerfrequenz $f_{21}$, $f_{22}$, die niedriger ist, als die erste, umgesetzt und auf dieser zweiten Trägerfrequenz wieder in die Mittelspannungsebene 3 eingespeist. Die Aussendung der transponierten Daten erfolgt mit einer vergleichsweise geringen Reichweite, so dass die Daten nur über die am nächsten liegenden Niederspannungstransformatoren 5 zu den zugeordneten Hausanschlüssen 24 gelangen.

Zur Versorgung grösserer Gebiete mit einer Vielzahl von Hausanschlüssen 24 wird daher entlang der Mittelspannungsebene 3 eine Vielzahl von Transpondern 8, 9 angeordnet, die jeweils für sich lokale Gebiete abdecken. Um gegenseitige Störungen benachbarter Transponder zu vermeiden, ist es zweckmässig, für die zweite Trägerfrequenz $f_{21}$, $f_{22}$ unterschiedliche Frequenzen (hier $f_{21}$ und $f_{22}$) zu wählen, derart, dass benachbarte Transponder stets mit unterschiedlichen zweiten Trägerfrequenzen arbeiten. So arbeitet im Beispiel der Fig. 1 der obere Transponder 9 mit einer zweiten Trägerfrequenz $f_{22}$ (wie durch den Doppelpfeil angedeutet), während der untere Transponder 8 mit den entsprechenden Hausanschlüssen 24 auf der zweiten Trägerfrequenz $f_{21}$ Daten austauscht (ebenfalls durch die Doppelpfeile angedeutet).

Die Transponder 8, 9 stellen also Bindeglieder zwischen der zentralen Kontrollstation 6 und den Endstationen 10 an den Hausanschlüssen 24 dar, die einerseits mit der zentralen Kontrollstation 6 auf der ersten Trägerfrequenz $f_1$ zentral kommunizieren, andererseits mit den Endstationen 10 auf einer Vielzahl von zweiten Trägerfrequenzen $f_{21}$, $f_{22}$ lokal kommunizieren.

Die erste Trägerfrequenz $f_1$ liegt bei den üblichen Verteilnetzen vorzugsweise in einem Frequenzbereich von kHz bis 140 kHz. Dadurch wird eine relativ grosse Reichweite auf der Mittelspannungsebene erzielt, ohne dass grössere Störungen durch Netzharmonische auftreten. Insbesondere wird der ganze angegebene Frequenzbereich ausgenutzt, wenn die Uebertragung zwischen der zentralen Kontrollstation 6 und den Transpondern 8, 9 auf ständig wechselnden ersten Trägerfrequenzen nach dem Prinzip des "Frequency Hopping" (FH) erfolgt. Auf diese Art der Uebertragung wird im folgenden noch näher eingegangen.

Die zweiten Trägerfrequenzen $f_{21}$, $f_{22}$ liegen deutlich unter der ersten Trägerfrequenz $f_1$ in einem bevorzugten Frequenzbereich von 4 kHz bis 20 kHz. Dadurch ist gewährleistet, dass die Daten ohne Bypass-Schaltung direkt über die Niederspannungstransformatoren 5 zwischen den Transpondern 8, 9 und den Endstationen 10 ausgetauscht werden können, ohne dass die Uebertragung zu sehr durch Netzharmonische gestört wird. Auch dieser Frequenzbereich kann voll ausgeschöpft werden, wenn auch in diesem Nachrichtenkanal ein FH-System zur Anwendung gelangt. Andererseits können aus diesem Frequenzbereich hinreichend viele feste zweite Trägerfrequenzen $f_{21}$, $f_{22}$ aus gewählt werden, um für benachbarte Transponder 8, 9 unterschiedliche Frequenzen zur Verfügung zu stellen.

Als Modulationsarten für die Uebertragung der Daten auf der ersten Trägerfrequenz $f_1$ und der zweiten Trägerfrequenz $f_{21}$, $f_{22}$ kommen neben der Frequenzmodulation (FSK = Frequency Shift Keying) vor allem die Phasenmodulation (PSK = Phase Shift Keying) in Betracht, insbesondere in der Form des m-PSK mit m verschiedenen Phasenlagen. Der einfachste Unterfall ist die Zweiphasenmodulation (BPSK = Bi-Phase Shift Keying). Neben der normalen Phasenmodulation kann ebenso die differentielle Phasenmodulation (DPSK = Differential Phase Shift Keying) mit Erfolg verwendet werden.

Die Phasenmodulationsarten haben den besonderen Vorteil, dass mit ihnen eine Datenübertragung auf energetisch besonders günstige Weise vorgenommen werden kann, wodurch zugleich die Anlagekosten klein gehalten werden können.

Die Blockschaltung der zentralen Kontrollstation 6 für das Beispiel eines Nachrichtenkanals mit PSK und FH um fasst einen Sendeteil und einen Empfangsteil. Der Sendeteil enthält einen PSK-Modulator 11 mit einem Dateneingang und einem weiteren Eingang, in den die aus einem Oszillator 15 kommende Trägerfrequenz eingespeist wird. Die phasenmodulierte Trägerfrequenz gelangt vom PSK-Modulator 11 auf eine senderseitige Frequenzhüpfer-Schaltung 12, die mit einer Frequenzsynthese-Schaltung 13 in Verbindung steht, und aus dem eingehenden Signal ein phasenmoduliertes Signal mit ständig wechselnder Trägerfrequenz erzeugt. Hinter der Frequenzhüpfer-Schaltung 12 kann noch ein Leitungsstreiber 14 vorgesehen werden, der das Signal hinreichend verstärkt, um die gesamte Mittelspannungsebene 3 abdecken zu können. Vom Leitungstreiber 14 gelangt das phasenmodulierte Signal über eine gemeinsame Ein-/Ausgangsleitung und das Koppelglied 7 auf die Mittelspannungsebene 3.

Der Empfangsteil enthält analog neben der Frequenzsynthese-Schaltung 13 und dem Oszillator 15 eine empfängerseitige Frequenzhüpfer-Schaltung 17 und einen PSK-Demodulator 18, die aus dem ankommenden FH/PSK-Signal die Daten zurückgewinnen.

Die Prinzipien der FH/PSK-Uebertragung sind z.B. aus dem Artikel von C.E. Cook und H.S. Marsh "An Introduction to Spread Spectrum", IEEE Communications Magazine, March 1983, S. 8 -16, bekannt.

In dem Transponder 8, 9 gemäss Fig. 3 sind zwei Sende-/Empfangsteile vorhanden. Der eine Sende-/Empfangsteil empfängt die Daten von den Endstationen 10, transponiert sie und sendet sie an die zentrale Kontrollstation 6. Der andere Sende-/Empfangsteil ist für die Uebertragung in entgegengesetzter Richtung zuständig.

Ueber eine gemeinsame Ein-und Ausgangsleitung, über die der Transponder 8, 9 durch das Koppelglied 7 mit der Mittelspannungsebene 3 in Verbindung steht, kommen die auf die zweite Trägerfrequenz $f_{21}$, $f_{22}$ aufmodulierten Daten von den Endstationen 10 auf einen NF-Demodulator 21, nachdem sie vorzugsweise in einem vorgeschalteten NF-Empfängerverstärker 20 vorverstärkt worden sind. Die Vorsilbe NF ( = Niederfrequenz) ist hier der Einfachheit halber benutzt, um die im Bereich der zweiten Trägerfrequenz (vorzugsweise 4 -20 kHz) arbeitenden Schaltungen von den im Bereich der ersten Trägerfrequenz arbeitenden zu unterscheiden.

Die im NF-Demodulator 21 demodulierten Daten werden beispielsweise in einem Regenerator 23 regeneriert und dann über den aus den Blöcken 11 -15 bestehenden Sendeteil, der dem Sendeteil aus Fig. 2 entspricht, FH/PSK-moduliert über die Mittelspannungsebene 3 an die zentrale Kontrollstation 6 abgesetzt.

Dem beschriebenen, auf der linken Seite der Fig. 3 angeordneten Sende-/Empfangsteil entspricht ein auf der rechten Seite dargestellter, in umgekehrter Weise arbeitender Sende-/Empfangsteil, dessen Empfangsteil, entsprechend dem Empfangsteil aus Fig. 2, die Blöcke 13, 15, 16 -18 umfasst, und dessen Sendeteil im wesentlichen aus einem NF-Modulator 19 besteht, dem ein NF-Leitungstreiber 22 nachgeschaltet werden kann. Auch hier ist im Beispiel der Fig. 3 zwischen dem PSK-Demodulator 18 und dem NF-Modulator 19 ein Regenerator 23 vorgesehen.

Ebenso wie die PSK-Modulator 11 und PSK-Demodulator 18 können auch der NF-Modulator 19 und der NF-Demodulator 21 als PSK-Modulatoren bzw. -Demodulatoren ausgebildet sein, wenn für die Uebertragung zwischen Transponder 8, 9 und Endstation 10 eine PSK-Modulation verwendet wird. Jedoch können ebensogut andere Modulationsarten wie z.B. FSK implementiert werden.

Der nicht dargestellte Aufbau des Sende-Empfängers in der Endstation gleicht dem aus Fig. 2 mit dem Unterschied, dass anstelle der Blöcke 11 -15 bzw. 13, 15 -18 die entsprechenden Blöcke 19, 22 bzw. 20, 21 in der Konfiguration der Fig. 3 einzusetzen sind.

Insgesamt erhält man nach der Erfindung ein Verfahren und ein System zur Zweiweg-Kommunikation zwischen der zentralen Kontrollstation 6 und den Endstationen 10, bei dem die Signale optimal an die Gegebenheiten des jeweiligen Nachrichtenkanals angepasst werden können. Die zwei Komponenten des Uebertragungssystems, nämlich die Uebertragung mit der ersten und der zweiten Trägerfrequenz, können getrennt optimiert werden, insbesondere hinsichtlich der Datenraten, der Signalformate und der Signalleistungen, was zu einem Kommunikationssystem im Verteilnetz mit deutlich verbesserten Uebertragungseigenschaften führt.

## Bezeichnungsliste

1 Hochspannungsebene
2 Unterstation
3 Mittelspannungsebene
4 Niederspannungsebene
5 Niederspannungstransformator
6 Zentrale Kontrollstation (Central Controller)
7 Koppelglied
8, 9 Transponder
10 Endstation
11 PSK-Modulator
12 Frequenzhüpfer-Schaltung (senderseitig)
13 Frequenzsynthese-Schaltung
14 Leitungstreiber
15 Oszillator
16 Empfängerverstärker
17 Frequenzhüpfer-Schaltung (empfängerseitig)
18 PSK-Demodulator
19 NF-Modulator
20 NF-Empfängerverstärker
21 NF-Demodulator
22 NF-Leitungstreiber
23 Regenerator
24 Hausanschluss
$f_1$ erste Trägerfrequenz

$f_{21}$, $f_{22}$ zweite Trägerfrequenz

## Ansprüche

1. Verfahren zur Datenübertragung über ein elektrisches Verteilnetz, welches eine Hochspannungsebene, eine Mittelspannungsebene und eine Niederspannungsebene umfasst, dadurch gekennzeichnet, dass über die Mittelspannungsebene (3) und die Niederspannungsebene (4) Daten zwischen einer zentralen Kontrollstation (6) und wenigstens einer Endstation (10) ausgetauscht werden, und dass die Uebertragung der Daten auf der Mittelspannungsebene (3) mittels ener ersten Trägerfrequenz ($f_1$) und die Uebertragung von der Mittelspannungsebene (3) zur Niederspannungsebene (4) mittels einer zweiten Trägerfrequenz ($f_{21}$, $f_{22}$) erfolgt, welche kleiner ist als die erste Trägerfrequenz.

2. Verfahren nach Anspruch 1, dadurch gekennzeichnet, dass die erste Trägerfrequenz ($f_1$) im Frequenzbereich zwischen 20 kHz und 140 kHz, und die zweite Trägerfrequenz ($f_{21}$, $f_{22}$) im Frequenzbereich zwischen 4 kHz und 20 kHz liegen.

3. Verfahren nach Anspruch 1, dadurch gekennzeichnet, dass zur Uebertragung auf der Mittelspannungsebene (3) die erste Trägerfrequenz - ($f_1$) phasenmoduliert wird.

4. Verfahren nach Anspruch 3, dadurch gekennzeichnet, dass die Uebertragung auf der Mittelspannungsebene (3) mit einer ständig wechselnden ersten Trägerfrequenz ($f_1$) erfolgt.

5. Uebertragungssystem zur Durchführung des Verfahrens nach Anspruch 1 mit einer zentralen Kontrollstation (6) und wenigstens einer Endstation (10), dadurch gekennzeichnet, dass die zentrale Kontrollstation (6) auf der Mittelspannungsseite einer zwischen Hochspannungsebene (1) und Mittelspannungsebene (3) gelegenen Unterstation (2) an die Mittelspannungsebene (3) angekoppelt ist, und auf der Mittelspannungsebene (3) wenigstens ein Transponder (8, 9) vorgesehen ist, der die mit der ersten Trägerfrequenz ($f_1$) übertragenen Daten aus der Mittelspannungsebene (3) aufnimmt, auf die zweite Trägerfrequenz ($f_{21}$, $f_{22}$) umsetzt, und wieder in die Mittelspannungsebene einspeist, und umgekehrt, und dass der Endanschluss (10) einen Sende-Empfänger für die transponierten Daten aufweist.

6. Uebertragungssystem nach Anspruch 5, dadurch gekennzeichnet, dass die zentrale Kontrollstation (6) auf der Sendeseite einen PSK-Modulator (11) und eine senderseitige Frequenzhüpfer-Schaltung (12) und auf der Empfängerseite einen entsprechenden PSK-Demodulator (18) und eine

9      0 231 457      10

empfängerseitige Frequenzhüpfer-Schaltung (17) aufweist, welche alle im Bereich der ersten Trägerfrequenz arbeiten.

7. Uebertragungssystem nach Anspruch 6, dadurch gekennzeichnet, dass der Transponder (8, 9) zwei parallel arbeitende Sende-Empfänger enthält, von denen der eine einen NF-Demodulator (21) zur Demodulation der auf der zweiten Trägerfrequenz ($f_{21}$, $f_{22}$) übertragenen Daten und einen nachgeschalteten PSK-Modulator (11) sowie eine nachgeschaltete senderseitige Frequenzhüpfer-Schaltung (12) enthält, und der andere in umgekehrter Reihenfolge eine empfängerseitige Frequenzhüpfer-Schaltung (17), einen PSK-Demodulator (18) und einen NF-Modulator (19) zur Modulation der zweiten Trägerfrequenz ($f_{21}$, $f_{22}$) aufweist.

8. Uebertragungssystem nach Anspruch 6, dadurch gekennzeichnet, dass eine Mehrzahl von Transpondern (8, 9) an die Mittelspannungsebene - (3) angekoppelt sind und dass nebeneinanderliegende Transponder (8, 9) die Daten auf unterschiedliche zweite Trägerfrequenzen ($f_{21}$, $f_{22}$) transponieren.

6

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 911 415 (I.A. WHYTE) <br> * Spalte 5, Zeile 12 - Spalte 6, Zeile 3; Spalte 7, Zeile 17 - Spalte 11, Zeile 26; Spalte 16, Zeilen 18-54; Zusammenfassung; Figuren 1,2 * | 1,5,8 | H 02 J 13/00 <br> H 04 B 3/54 |
| A | | 2,3,7 | |
| | --- | | |
| A | GB-A-2 094 598 (SANGAMO WESTON LTD) <br> * Zusammenfassung; Figur 1 * | 1,2,4, 6 | |
| | --- | | |
| A | US-A-2 894 208 (R.P. CROW) <br> * Spalte 1, Zeile 1 - Spalte 2, Zeile 5; Figur 1 * | 1,4,6 | |
| | --- | | RECHERCHIERTE SACHGEBIETE (Int. Cl.4) |
| A | US-A-4 535 447 (A.P. ROSANES) <br> * Zusammenfassung; Figur 1 * | 1,3 | H 02 J <br> H 04 B |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 13-04-1987 | FOURRICHON, P.M.L. |